# EUROPEAN PATENT SPECIFICATION

(11) **EP 3 530 402 B1**
(45) Date of publication and mention of the grant of the patent: **16.09.2026**
(21) Application number: 19158300.4
(22) Date of filing: 20.02.2019
(51) Int. Cl.: B23P 19/02, B23P 19/10, B23P 19/08, B23P 19/00, B60B 7/00, B60B 30/06

(54) **WHEEL AIRTIGHT RUBBER RING PRESS-FITTING DEVICE**
LUFTDICHTE KAUTSCHUKRINGEINPRESSVORRICHTUNG FÜR EIN RAD
DISPOSITIF D'ASSEMBLAGE PAR PRESSION DE BAGUE EN CAOUTCHOUC ÉTANCHE À L'AIR POUR ROUE

(30) Priority: 24.02.2018 CN 201810157080
(43) Date of publication of application: 28.08.2019
(73) Proprietor: Citic Dicastal Co., Ltd., 066011 Quinhuangdao, Heibei (CN)
(72) Inventor: Liu, Huiying, Qinhuangdao, Heibei 066011 (CN); Shi, Baojun, Qinhuangdao, Heibei 066011 (CN)
(74) Representative: Gong, Jinping

(56) References cited:
- CN-A- 107 283 000
- CN-A- 107 414 193
- CN-U- 203 791 607
- CN-U- 205 503 991
- CN-U- 206 898 401
- DE-A1- 102005 013 423
- GB-A- 2 273 546
- JP-A- H10 267 128
- US-A1- 2017 182 761

## Description

### Field of the Invention

The present invention relates to the technical field of installation of wheel airtight rubber rings, specifically to a device for press-fitting an airtight sealing rubber ring onto a wheel.

### Background of the Invention

During airtight detection of a wheel, a lid-shaped airtight rubber disc is needed to cover the outer rim of the wheel, and the circumference and the bottom are sealed, so that the outer rim of the wheel forms a closed cavity and the pressure leakage is detected. When the front rim of the wheel is continuous without disconnection, the front rim of the wheel can be sealed by the lid-shaped airtight rubber disc. However, discontinuous rims are becoming more and more popular. Some rims still have height differences of about 2-5 mm. At this time, the rim cannot be sealed directly using the lid-shaped airtight rubber disc, but an airtight rubber ring is press-fitted on the rim to seal the rim and then the airtight detection is performed. When the rubber ring is press-fitted manually, the efficiency and the precision are low, and the deflection phenomenon occurs easily. Based on the present situation, this patent provides a device for press-fitting an airtight rubber ring onto a wheel with high precision.US 2017/182761 A1 discloses an improved vehicle wheel rolling carving device, consisting of a left impressing system, a right impressing system, a lower synchronous clamping driving system, a left support system, a right support system, an upper synchronous clamping driving system and the like.

CN 107 414 193 A provides a high-precision wheel flange burr removing device. And CN 107 283 000 A provides a high-precision device for removing burrs of a wheel riser. These two documents address the problem of the coaxial deviation between the outer and the inner rim of the wheel and discloses a rough positioning step followed by a precision positioning step for the wheel but for machining operations.

DE 10 2005 013423 A1 discloses a method involving applying gaskets on sub-sockets for the production of concrete pipes and concrete shaft rings, during which gaskets are supplied.

GB 2 273 546 A relates to a machine for automatically locking elastic seals which are pre-fitted on to tubs of washing machines, in particular front-loading clothes washing machines.

CN 205 503 991 U refers to an airtight detection sealing device according to the preamble of claim 1.

### Summary of the Invention

The object of the present invention is to provide a device for press-fitting an airtight rubber ring onto a wheel with high precision, which can be used for automatic continuous production. The device is advanced in process, novel in structure, accurate and efficient.

To this end, the present invention provides a wheel airtight rubber ring press-fitting device according to claim 1. Some features of optional or preferred embodiments are recited in the dependent claims.

A wheel airtight rubber ring press-fitting device consists of a frame , servo motors I , ball screw pairs , guide rails I , a cylinder I, a left sliding plate , a gear rack , a right sliding plate , rough positioning wheels , lifting plates , cylinders II , guide rails II , sliding blocks , precision positioning wheels , airtight rubber rings , a guide post A, a pressure plate , a lifting platform A, a cylinder A, a cylinder B , a guide post B , a servo motor II , a lifting platform B , a rotating table , a manipulator I , a manipulator II , a cylinder C , a guide post C and a lifting platform C . These parts constitute a wheel positioning unit, a rubber ring placement unit, a rubber ring supply unit and a rubber ring press-fitting unit.

The wheel positioning unit completes rough positioning and precision positioning of a wheel, the rubber ring placement unit completes rubber ring station switching placement, the rubber ring supply unit completes automatic feeding of the rubber rings, and the rubber ring press-fitting unit completes press-fitting of the rubber rings.

The two guide rails I are fixed on a support plate, the left sliding plate and the right sliding plate are mounted on the guide rails I and connected through the gear rack , and the four rough positioning wheels are respectively mounted on the left sliding plate and the right sliding plate . When the cylinder I drives the left sliding plate to move, the right sliding plate moves synchronously under the action of the gear rack , and the wheel can be roughly positioned by the four rough positioning wheels . A servo motor I is fixedly mounted on the left side of the frame , the output end of the servo motor I is connected with a ball screw pair , the servo motor I controls the up-and-down movement of a lifting plate under the guidance of the guide rail, the cylinder II is fixed on the lifting plate , the output end of the cylinder II is connected to a sliding block to control the horizontal movement of the sliding block under the guidance of the guide rail II , and two precision positioning wheels are mounted at the front end of the sliding block and used for precisely positioning an outer bead seat. The right side of the frame is arranged in the same manner as the left side, and two precision positioning wheels are symmetrically distributed. After the wheel is roughly positioned, the rough positioning wheels are retracted and reset, and the cylinders II on the left and right sides are simultaneously started to drive the four precision positioning wheels to contact the outer bead seat of the wheel so as to realize precision positioning. The heights of the precision positioning wheels can be adjusted through the servo motors I , so that this device can be used for press-fitting rubber rings onto wheels with different heights and is stronger in versatility. The turning process of the aluminum wheel is completed in two times. The inner rim is turned by first turning, and the outer rim is turned by second turning. Therefore, the inner rim and the outer rim have a coaxial deviation. For the assembly line operation, the inner rim is roughly positioned first, then the outer rim is precisely positioned, and the central axis of the press-fitted airtight rubber ring coincides with the center axis of the outer rim of the wheel, thereby greatly improving the positioning precision and eliminating the risk of press-fitting deflection of the rubber ring. This is the wheel positioning unit.

The output end of the cylinder B is connected to the lifting platform B , and the cylinder B controls the up-and-down movement of the lifting platform B under the guidance of the guide post B . The servo motor II is fixed on the lifting platform B , and the output end of the servo motor II is connected to the rotating table . The manipulator I and the manipulator II are bilaterally symmetrically mounted on the rotating table . During working, the manipulator on the left side is used for placing an airtight rubber ring , the manipulator on the right side is used for loading next airtight rubber ring , and the left and right positions of the manipulator I and the manipulator II can be cyclically switched through the servo motor II . The output end of the cylinder C is connected to the lifting platform C , the cylinder C controls the up-and-down movement of the lifting platform C under the guidance of the guide post C , and the airtight rubber rings are vertically stacked on the lifting platform C . In the initial state, the left manipulator I is loaded with the airtight rubber rings , and the right manipulator II is unloaded. After the wheel is precisely positioned, the cylinder B drives the lifting platform B to descend, so that an airtight rubber ring contacts the front side of the wheel. Then, the manipulator I is opened to release the airtight rubber ring. Next, the cylinder B drives the lifting platform B to descend again a certain distance to reserve a space for press-fitting. The cylinder C drives the lifting platform C to ascend a certain distance during press-fitting so that the airtight rubber ring stacked at the top rises to an appropriate height clamped by the manipulator arm II , and then the manipulator II clamps the top airtight rubber ring . These are the airtight rubber ring placement and supply units.

The cylinder A is mounted at the top of the frame, the cylinder A controls the up-and-down movement of the lifting platform A under the guidance of the guide post A , and the pressure plate is fixed on the lifting platform A. After the wheel is precisely positioned and the airtight rubber ring is placed on the front side of the wheel, the cylinder A is started, the pressure plate is driven to descend, and the airtight rubber ring is pressed into the outer rim of the wheel. This is the airtight rubber ring press-fitting unit.

The working process of the wheel airtight rubber ring press-fitting device is: first, the heights of the precision positioning wheels are adjusted through the servo motors I according to a wheel produced on line. The cylinder I drives the left sliding plate to move, the right sliding plate moves synchronously under the action of the gear rack , the wheel is roughly positioned through the four rough positioning wheels , and then the rough positioning wheels are retracted and reset. Next, the left and right cylinders II are started simultaneously to drive the four precision positioning wheels to contact the outer bead seat of the wheel to precisely position the wheel. In the initial state, the left manipulator I is loaded with the airtight rubber rings , and the right manipulator II is unloaded. After the wheel is precisely positioned, the cylinder B drives the lifting platform B to descend, so that an airtight rubber ring contacts the front side of the wheel. Then, the manipulator I is opened to release the airtight rubber ring . Next, the cylinder B drives the lifting platform B to descend again a certain distance to reserve a space for press-fitting. The cylinder A then drives the pressure plate to descend to press the airtight rubber ring into the outer rim of the wheel, the cylinder C drives the lifting platform C to ascend a certain distance during press-fitting so that the airtight rubber ring stacked at the top rises to an appropriate height clamped by the manipulator arm II , and then the manipulator II clamps the top airtight rubber ring . After the first wheel is press-fitted, the precision positioning wheels are retracted and reset, the pressure plate ascends and resets, then the cylinder B drives the lifting platform B to ascend and reset, the servo motor II is started to drive the rotating table to rotate 180 degrees, the airtight rubber ring clamped by the manipulator II is switched to the left side, the manipulator I is switched to the right side and is unloaded, so far, the device completes a cycle and restores to the initial state to wait for the next wheel positioning followed by press-fitting, and so on.

The present invention can be used for automatic continuous production. Through a reasonable process layout, the central axis of the airtight rubber ring coincides with the central axis of the outer rim of the wheel, so that the positioning precision is improved, and high-precision press-fitting is realized. Through cyclic switching of the double manipulators, the press-fitting feeding time is nested, the press-fitting cycle is shortened, and the working efficiency is improved.

### Brief Description of the Drawings

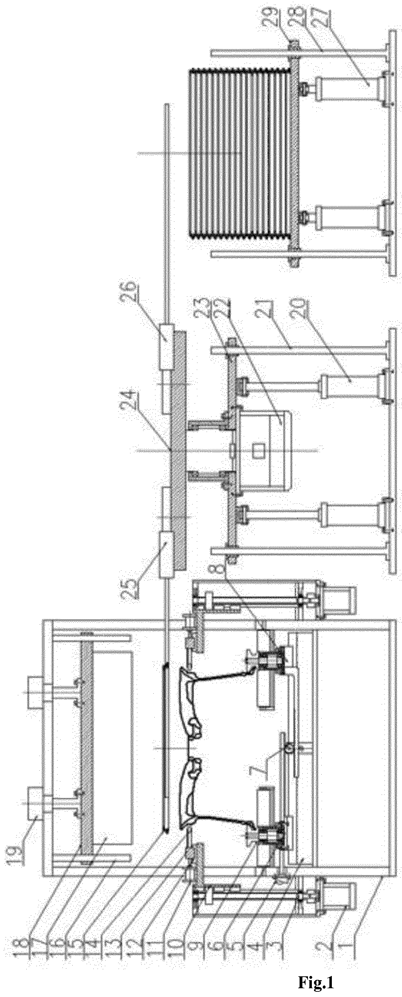

Fig. 1 is a front view of a wheel airtight rubber ring press-fitting device of the present invention.

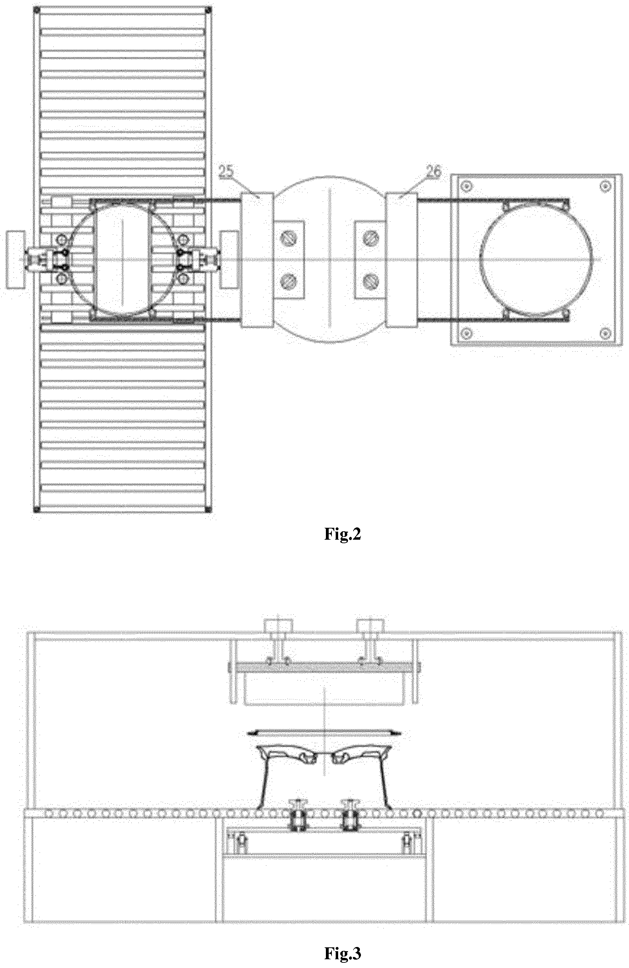

Fig. 2 is a top view of the wheel airtight rubber ring press-fitting device of the present invention.
Fig. 3 is a left view of the wheel airtight rubber ring press-fitting device of the present invention.

In which, 1-frame, 2-servo motor I, 3-ball screw pair, 4-guide rail I, 5-cylinder I, 6-left sliding plate, 7-gear rack, 8-right sliding plate, 9-rough positioning wheel, 10-lifting plate, 11-cylinder II, 12-guide rail II, 13-sliding block, 14-precision positioning wheel, 15-airtight rubber ring, 16-guide post A, 17-pressure plate, 18-lifting platform A, 19-cylinder A, 20-cylinder B, 21-guide post B, 22-servo motor II, 23-lifting platform B, 24-rotating table, 25-manipulator I, 26-manipulator II, 27-cylinder C, 28-guide post C, 29-lifting platform C.

### Detailed Description of the Embodiments

The details and working conditions of the specific device proposed by the present invention will be described below in combination with the accompanying drawings.

A wheel airtight rubber ring press-fitting device consists of a frame 1, servo motors I 2, ball screw pairs 3, guide rails I 4, a cylinder I 5, a left sliding plate 6, a gear rack 7, a right sliding plate 8, rough positioning wheels 9, lifting plates 10, cylinders II 11, guide rails II 12, sliding blocks 13, precision positioning wheels 14, airtight rubber rings 15, a guide post A16, a pressure plate 17, a lifting platform A 18, a cylinder A 19, a cylinder B 20, a guide post B 21, a servo motor II 22, a lifting platform B 23, a rotating table 24, a manipulator I 25, a manipulator II 26, a cylinder C 27, a guide post C 28 and a lifting platform C 29. These parts constitute a wheel positioning unit, a rubber ring placement unit, a rubber ring supply unit and a rubber ring press-fitting unit.

The wheel positioning unit completes rough positioning and precision positioning of a wheel, the rubber ring placement unit completes rubber ring station switching placement, the rubber ring supply unit completes automatic feeding of the rubber rings, and the rubber ring press-fitting unit completes press-fitting of the rubber rings.

The two guide rails I 4 are fixed on a support plate, the left sliding plate 6 and the right sliding plate 8 are mounted on the guide rails I 4 and connected through the gear rack 7, and the four rough positioning wheels 9 are respectively mounted on the left sliding plate 6 and the right sliding plate 8. When the cylinder I 5 drives the left sliding plate 6 to move, the right sliding plate 8 moves synchronously under the action of the gear rack 7, and the wheel can be roughly positioned by the four rough positioning wheels 9. A servo motor I 2 is fixedly mounted on the left side of the frame 1, the output end of the servo motor I 2 is connected with a ball screw pair 3, the servo motor I 2 controls the up-and-down movement of a lifting plate 10 under the guidance of the guide rail, the cylinder II 11 is fixed on the lifting plate 10, the output end of the cylinder II 11 is connected to a sliding block 13 to control the horizontal movement of the sliding block 13 under the guidance of the guide rail II 12, and two precision positioning wheels 14 are mounted at the front end of the sliding block 13 and used for precisely positioning an outer bead seat. The right side of the frame 1 is arranged in the same manner as the left side, and two precision positioning wheels 14 are symmetrically distributed. After the wheel is roughly positioned, the rough positioning wheels 9 are retracted and reset, and the cylinders II 11 on the left and right sides are simultaneously started to drive the four precision positioning wheels 14 to contact the outer bead seat of the wheel so as to realize precision positioning. The heights of the precision positioning wheels 14 can be adjusted through the servo motors I 2, so that this device can be used for press-fitting rubber rings onto wheels with different heights and is stronger in versatility. The turning process of the aluminum wheel is completed in two times. The inner rim is turned by first turning, and the outer rim is turned by second turning. Therefore, the inner rim and the outer rim have a coaxial deviation. For the assembly line operation, the inner rim is roughly positioned first, then the outer rim is precisely positioned, and the central axis of the press-fitted airtight rubber ring coincides with the center axis of the outer rim of the wheel, thereby greatly improving the positioning precision and eliminating the risk of press-fitting deflection of the rubber ring. This is the wheel positioning unit.

The output end of the cylinder B 20 is connected to the lifting platform B 23, and the cylinder B 20 controls the up-and-down movement of the lifting platform B 23under the guidance of the guide post B 21. The servo motor II 22 is fixed on the lifting platform B 23, and the output end of the servo motor II 22 is connected to the rotating table 24. The manipulator I 25 and the manipulator II 26 are bilaterally symmetrically mounted on the rotating table 24. During working, the manipulator on the left side is used for placing an airtight rubber ring 15, the manipulator on the right side is used for loading next airtight rubber ring 15, and the left and right positions of the manipulator I 25 and the manipulator II 26 can be cyclically switched through the servo motor II 22. The output end of the cylinder C 27 is connected to the lifting platform C 29, the cylinder C 27 controls the up-and-down movement of the lifting platform C 29 under the guidance of the guide post C 28, and the airtight rubber rings 15 are vertically stacked on the lifting platform C 29. In the initial state, the left manipulator I 25 is loaded with the airtight rubber rings 15, and the right manipulator II 26 is unloaded. After the wheel is precisely positioned, the cylinder B 20 drives the lifting platform B 23 to descend, so that an airtight rubber ring 15 contacts the front side of the wheel. Then, the manipulator I 25 is opened to release the airtight rubber ring 15. Next, the cylinder B 20 drives the lifting platform B 23 to descend again a certain distance to reserve a space for press-fitting. The cylinder C 27 drives the lifting platform C 29 to ascend a certain distance during press-fitting so that the airtight rubber ring 15 stacked at the top rises to an appropriate height clamped by the manipulator arm II 26, and then the manipulator II 26 clamps the top airtight rubber ring 15. These are the airtight rubber ring placement and supply units.

The cylinder A 19 is mounted at the top of the frame, the cylinder A 19 controls the up-and-down movement of the lifting platform A 18 under the guidance of the guide post A 16, and the pressure plate 17 is fixed on the lifting platform A 18. After the wheel is precisely positioned and the airtight rubber ring 15 is placed on the front side of the wheel, the cylinder A 19 is started, the pressure plate 17 is driven to descend, and the airtight rubber ring 15 is pressed into the outer rim of the wheel. This is the airtight rubber ring press-fitting unit.

The working process of the wheel airtight rubber ring press-fitting device is: first, the heights of the precision positioning wheels 14 are adjusted through the servo motors I 2 according to a wheel produced on line. The cylinder I 5 drives the left sliding plate 6 to move, the right sliding plate 8 moves synchronously under the action of the gear rack 7, the wheel is roughly positioned through the four rough positioning wheels 9, and then the rough positioning wheels 9 are retracted and reset. Next, the left and right cylinders II 11 are started simultaneously to drive the four precision positioning wheels 14 to contact the outer bead seat of the wheel to precisely position the wheel. In the initial state, the left manipulator I 25 is loaded with the airtight rubber rings 15, and the right manipulator II 26 is unloaded. After the wheel is precisely positioned, the cylinder B 20 drives the lifting platform B 23 to descend, so that an airtight rubber ring 15 contacts the front side of the wheel. Then, the manipulator I 25 is opened to release the airtight rubber ring 15. Next, the cylinder B 20 drives the lifting platform B 23 to descend again a certain distance to reserve a space for press-fitting. The cylinder A 19 then drives the pressure plate 17 to descend to press the airtight rubber ring 15 into the outer rim of the wheel, the cylinder C 27 drives the lifting platform C 29 to ascend a certain distance during press-fitting so that the airtight rubber ring 15 stacked at the top rises to an appropriate height clamped by the manipulator arm II 26, and then the manipulator II 26 clamps the top airtight rubber ring 15. After the first wheel is press-fitted, the precision positioning wheels 14 are retracted and reset, the pressure plate 17 ascends and resets, then the cylinder B 20 drives the lifting platform B 23 to ascend and reset, the servo motor II 22 is started to drive the rotating table 24 to rotate 180 degrees, the airtight rubber ring clamped by the manipulator II 26 is switched to the left side, the manipulator I 25 is switched to the right side and is unloaded, so far, the device completes a cycle and restores to the initial state to wait for the next wheel positioning followed by press-fitting, and so on.

The present invention can be used for automatic continuous production. Through a reasonable process layout, the central axis of the airtight rubber ring coincides with the central axis of the outer rim of the wheel, so that the positioning precision is improved, and high-precision press-fitting is realized. Through cyclic switching of the double manipulators, the press-fitting feeding time is nested, the press-fitting cycle is shortened, and the working efficiency is improved.

## Claims

1. A wheel airtight rubber ring press-fitting device, consisting of a frame (1) and wherein the airtight rubber ring press-fitting unit comprises a guide post A (16), a pressure plate (17), a lifting platform A (18) and a cylinder A (19), which are configured to complete press-fitting of airtight rubber ring(s) (15),
**characterized by** a wheel positioning unit, an airtight rubber ring press-fitting unit arranged thereon, and airtight rubber ring placement and supply units,
wherein the wheel positioning unit comprises a servo motor I (2), ball screw pairs (3), guide rails I (4), a cylinder I (5), a left sliding plate (6), a gear rack (7), a right sliding plate (8), rough positioning wheels (9), lifting plates (10), cylinders II (11), guide rails II (12), sliding blocks (13), and precision positioning wheels (14), wherein the servo motor I (2) is fixedly mounted on the left side of the frame (1), the output end of the servo motor I (2) is connected with the ball screw pair (3), the servo motor I (2) controls the up-and-down movement of the lifting plate (10) under the guidance of the guide rail, the cylinder II (11) is fixed on the lifting plate (10), the output end of the cylinder II is connected with the sliding block (13) to control the horizontal movement of the sliding block (13) under the guidance of the guide rail II (12), and two precision positioning wheels (14) are mounted at the front end of the sliding block (13) and used for precisely positioning an outer bead seat; the right side of the frame (1) is arranged in the same manner as the left side, and two precision positioning wheels (14) are symmetrically distributed; wherein the wheel positioning unit is configured to complete rough positioning and precision positioning of a wheel in such a way that after a wheel is roughly positioned, the rough positioning wheels (9) are retracted and reset, and the cylinders II (11) on the left and right sides are simultaneously started to drive the four precision positioning wheels (14) to contact the outer bead seat of the wheel so as to realize precision positioning;
wherein the airtight rubber ring placement and supply units comprise a cylinder B (20), a guide post B (21), a servo motor II (22), a lifting platform B (23), a rotating table (24), a manipulator I (25), a manipulator II (26), a cylinder C (27), a guide post C (28) and a lifting platform C (29), which are configured to complete rubber ring station switching placement and to complete automatic feeding of rubber ring(s);
wherein the output end of the cylinder B (20) is connected to the lifting platform B (23), and the cylinder B (20) controls the up-and-down movement of the lifting platform B (23) under the guidance of the guide post B (21); the servo motor II (22) is fixed on the lifting platform B (23), and the output end of the servo motor II is connected to the rotating table (24); the manipulator I (25) and the manipulator II (26) are bilaterally symmetrically mounted on the rotating table (24); during working, the manipulator on the left side is used for placing an airtight rubber ring (15), the manipulator on the right side is used for loading next airtight rubber ring (15), and the left and right positions of the manipulator I (25) and the manipulator II (26) can be cyclically switched through the servo motor II (22); the output end of the cylinder C (27) is connected to the lifting platform C (29), the cylinder C (27) controls the up-and-down movement of the lifting platform C (29) under the guidance of the guide post C (28), and the airtight rubber rings (15) are vertically stacked on the lifting platform C (29); and in the initial state, the left manipulator I (25) is loaded with the airtight rubber rings (15), and the right manipulator II (26) is unloaded.

2. The wheel airtight rubber ring press-fitting device according to claim 1, wherein the cylinder A (19) is mounted at the top of the frame (1), the cylinder A (19) controls the up-and-down movement of the lifting platform A (18) under the guidance of the guide post A (16), and the pressure plate (17) is fixed on the lifting platform A (18), wherein the airtight rubber ring press-fitting unit is configured to complete press-fitting of rubber ring(s) in such a way that after the wheel is precisely positioned and the airtight rubber ring (15) is placed on the front side of the wheel, the cylinder A (19) is started, the pressure plate (17) is driven to descend, and the airtight rubber ring (15) is pressed into the outer rim of the wheel.

## Patentansprüche

1. Vorrichtung zum Einpressen von luftdichtem Gummiring eines Rades, umfassend einen Rahmen (1), wobei die Einheit zum Einpressen von luftdichtem Gummiring eine Führungssäule A (16), eine Druckplatte (17), eine Hubplattform A (18) und einen Zylinder A (19) umfasst, die dazu konfiguriert sind, Einpressen von luftdichtem Gummiring (15) durchzuführen,
**gekennzeichnet durch** eine Radpositioniereinheit, eine darauf angeordnete Einheit zum Einpressen von luftdichtem Gummiring sowie Einheiten zum Ablegen und Bereitstellen von luftdichtem Gummiring,
wobei die Radpositioniereinheit einen Servomotor I (2), Kugelgewindetriebe (3), Führungsschienen I (4), einen Zylinder I (5), eine linke Gleitplatte (6), eine Zahnstange (7), eine rechte Gleitplatte (8), Grobpositionierungsrollen (9), Hubplatten (10), Zylinder II (11), Führungsschienen II (12), Gleitsteine (13) und Feinpositionierungsrollen (14) umfasst, wobei der Servomotor I (2) fest auf der linken Seite des Rahmens (1) montiert ist, das Ausgangsende des Servomotors I (2) mit dem Kugelgewindetrieb (3) verbunden ist, der Servomotor I (2) die Auf- und Abbewegung der Hubplatte (10) unter der Führung der Führungsschiene steuert, der Zylinder II (11) auf der Hubplatte (10) befestigt ist, das Ausgangsende des Zylinders II mit dem Gleitstein (13) verbunden ist, um die horizontale Bewegung des Gleitsteins (13) unter der Führung der Führungsschiene II (12) zu steuern, und zwei Feinpositionierungsrollen (14) am vorderen Ende des Gleitsteins (13) angebracht sind und zur Feinpositionierung eines äußeren Wulstsitzes dienen; wobei die rechte Seite des Rahmens (1) genauso angeordnet ist wie die linke Seite, und zwei Feinpositionierungsrollen (14) symmetrisch verteilt sind; wobei die Radpositioniereinheit dazu konfiguriert ist, eine Grobpositionierung und eine Feinpositionierung eines Rades derart durchzuführen, dass nach einer Grobpositionierung eines Rades die Grobpositionierungsrollen (9) zurückgezogen und zurückgesetzt werden, und die Zylinder II (11) auf der linken und rechten Seite gleichzeitig gestartet werden, um die vier Feinpositionierungsrollen (14) anzutreiben, damit diese den äußeren Wulstsitz des Rades berühren, um so eine Feinpositionierung zu verwirklichen;
wobei die Einheiten zum Ablegen und Bereitstellen von luftdichtem Gummiring einen Zylinder B (20), eine Führungssäule B (21), einen Servomotor II (22), eine Hubplattform B (23), einen Drehtisch (24), einen Manipulator I (25), einen Manipulator II (26), einen Zylinder C (27), eine Führungssäule C (28) und eine Hubplattform C (29) umfassen, die dazu konfiguriert sind, Station wechselnde Ablegen von Gummiringen durchzuführen und automatische Zuführung von Gummiring(en) durchzuführen,
wobei das Ausgangsende des Zylinders B (20) mit der Hubplattform B (23) verbunden ist und der Zylinder B (20) die Auf- und Abbewegung der Hubplattform B (23) unter der Führung der Führungssäule B (21) steuert; wobei der Servomotor II (22) auf der Hubplattform B (23) befestigt ist, und das Ausgangsende des Servomotors II mit dem Drehtisch (24) verbunden ist; wobei der Manipulator I (25) und der Manipulator II (26) bilateral symmetrisch auf dem Drehtisch (24) montiert sind; wobei während des Betriebs der Manipulator auf der linken Seite zum Ablegen eines luftdichten Gummirings (15) verwendet ist, der Manipulator auf der rechten Seite zum Laden des nächsten luftdichten Gummirings (15) verwendet ist, und die linken und rechten Positionen des Manipulators I (25) und des Manipulators II (26) durch den Servomotor II (22) zyklisch gewechselt werden können; wobei das Ausgangsende des Zylinders C (27) mit der Hubplattform C (29) verbunden ist, der Zylinder C (27) die Auf- und Abbewegung der Hubplattform C (29) unter der Führung der Führungssäule C (28) steuert, und die luftdichten Gummiringe (15) vertikal auf der Hubplattform C (29) gestapelt sind; und wobei im Ausgangszustand der linke Manipulator I (25) mit den luftdichten Gummiringen (15) beladen ist, und der rechte Manipulator II (26) unbeladen ist.

2. Vorrichtung zum Einpressen von luftdichtem Gummiring eines Rades nach Anspruch 1, wobei der Zylinder A (19) an der Oberseite des Rahmens (1) montiert ist, der Zylinder A (19) die Auf- und Abbewegung der Hubplattform A (18) unter der Führung der Führungssäule A (16) steuert und die Druckplatte (17) auf der Hubplattform A (18) befestigt ist, wobei die Einheit zum Einpressen von luftdichtem Gummiring dazu konfiguriert ist, Einpressen von Gummiring(en) derart durchzuführen, dass, nachdem das Rad feinpositioniert und der luftdichte Gummiring (15) auf der Vorderseite des Rades gelegt wurde, der Zylinder A (19) gestartet wird, die Druckplatte (17) zum Absenken angetrieben wird und der luftdichte Gummiring (15) in die äußere Felge des Rades eingepresst wird.

## Revendications

1. Un dispositif de montage par pression de bague en caoutchouc étanche pour roue, consistant en un bâti (1) et dans lequel l'unité de montage par pression de bague en caoutchouc étanche comprend une colonne de guidage A (16), une plaque de pression (17), une plateforme de levage A (18) et un vérin A (19), qui sont configurés pour réaliser le montage par pression de bagues en caoutchouc étanche (15),
**caractérisé par** une unité de positionnement de roue, une unité de montage par pression de bague en caoutchouc étanche agencée sur celle-ci, et des unités de placement et d'alimentation de bagues en caoutchouc étanche,
dans lequel l'unité de positionnement de roue comprend un moteur servo I (2), des paires de vis à billes (3), des rails de guidage I (4), un vérin I (5), une plaque coulissante gauche (6), une crémaillère (7), une plaque coulissante droite (8), des roues de positionnement grossier (9), des plaques de levage (10), des vérins II (11), des rails de guidage II (12), des blocs coulissants (13), et des roues de positionnement de précision (14), dans lequel le moteur servo I (2) est monté fixement sur le côté gauche du bâti (1), l'extrémité de sortie du moteur servo I (2) est reliée à la paire de vis à billes (3), le moteur servo I (2) commande le mouvement de haut en bas de la plaque de levage (10) sous le guidage du rail de guidage, le vérin II (11) est fixé sur la plaque de levage (10), l'extrémité de sortie du vérin II est reliée au bloc coulissant (13) pour commander le mouvement horizontal du bloc coulissant (13) sous le guidage du rail de guidage II (12), et deux roues de positionnement de précision (14) sont montées à l'extrémité avant du bloc coulissant (13) et sont utilisées pour positionner précisément un siège de talon extérieur ; le côté droit du bâti (1) est agencé de la même manière que le côté gauche, et deux roues de positionnement de précision (14) sont réparties symétriquement ; dans lequel l'unité de positionnement de roue est configurée pour réaliser un positionnement grossier et un positionnement de précision d'une roue de telle sorte qu'après qu'une roue est positionnée grossièrement, les roues de positionnement grossier (9) sont rétractées et réinitialisées, et les vérins II (11) sur les côtés gauche et droit sont simultanément démarrés pour entraîner les quatre roues de positionnement de précision (14) à entrer en contact avec le siège de talon extérieur de la roue afin de réaliser un positionnement de précision ;
dans lequel les unités de placement et d'alimentation de bagues en caoutchouc étanche comprennent un vérin B (20), une colonne de guidage B (21), un moteur servo II (22), une plateforme de levage B (23), une table rotative (24), un manipulateur I (25), un manipulateur II (26), un vérin C (27), une colonne de guidage C (28) et une plateforme de levage C (29), qui sont configurés pour réaliser une commutation de poste de placement de bagues et pour réaliser une alimentation automatique de bagues ;
dans lequel l'extrémité de sortie du vérin B (20) est reliée à la plateforme de levage B (23), et le vérin B (20) commande le mouvement de haut en bas de la plateforme de levage B (23) sous le guidage de la colonne de guidage B (21) ; le moteur servo II (22) est fixé sur la plateforme de levage B (23), et l'extrémité de sortie du moteur servo II est reliée à la table rotative (24) ; le manipulateur I (25) et le manipulateur II (26) sont montés symétriquement de manière bilatérale sur la table rotative (24) ; pendant le fonctionnement, le manipulateur sur le côté gauche est utilisé pour placer une bague en caoutchouc étanche (15), le manipulateur sur le côté droit est utilisé pour charger la bague en caoutchouc étanche (15) suivante, et les positions gauche et droite du manipulateur I (25) et du manipulateur II (26) peuvent être commutées cycliquement par l'intermédiaire du moteur servo II (22) ; l'extrémité de sortie du vérin C (27) est reliée à la plateforme de levage C (29), le vérin C (27) commande le mouvement de haut en bas de la plateforme de levage C (29) sous le guidage de la colonne de guidage C (28), et les bagues en caoutchouc étanche (15) sont empilées verticalement sur la plateforme de levage C (29) ; et dans l'état initial, le manipulateur gauche I (25) est chargé avec les bagues en caoutchouc étanche (15), et le manipulateur droit II (26) est déchargé.

2. Le dispositif de montage par pression de bague en caoutchouc étanche pour roue selon la revendication 1, dans lequel le vérin A (19) est monté au sommet du bâti (1), le vérin A (19) commande le mouvement de haut en bas de la plateforme de levage A (18) sous le guidage de la colonne de guidage A (16), et la plaque de pression (17) est fixée sur la plateforme de levage A (18), dans lequel l'unité de montage par pression de bague en caoutchouc étanche est configurée pour réaliser le montage par pression de bagues de telle sorte qu'après que la roue est positionnée précisément et que la bague en caoutchouc étanche (15) est placée sur le côté avant de la roue, le vérin A (19) est démarré, la plaque de pression (17) est entraînée pour descendre, et la bague en caoutchouc étanche (15) est pressée dans le rebord extérieur de la roue.
